# EUROPÄISCHE PATENTSCHRIFT

(11) **EP 2 756 946 B1**
(45) Veröffentlichungstag und Bekanntmachung des Hinweises auf die Patenterteilung: **12.06.2019**
(21) Anmeldenummer: 14151432.3
(22) Anmeldetag: 16.01.2014
(51) Int. Cl.: B30B 9/32, B02C 19/00, B30B 3/00, B30B 3/04, B02C 4/08, B02C 4/30

(54) **Druckwalze für eine Vorrichtung zum Zusammendrücken leerer Getränkebehälter**
Pressure roller for a device for crushing empty beverage containers
Rouleau compresseur pour un dispositif de compression de récipients de boisson vides

(30) Priorität: 16.01.2013 DE 102013100439
(43) Veröffentlichungstag der Anmeldung: 23.07.2014
(73) Patentinhaber: Schwelling, Hermann, 88682 Salem (DE)
(72) Erfinder: Schwelling, Hermann, 88682 Salem (DE)
(74) Vertreter: Weickmann & Weickmann PartmbB

(56) Entgegenhaltungen:
- EP-A1- 0 774 300
- WO-A1-2010/054615
- JP-A- H1 170 525
- JP-A- H11 290 714
- JP-A- 2003 063 634
- JP-U- 3 025 701
- US-A- 4 009 838
- US-A1- 2012 137 904

## Beschreibung

### I. Anwendungsgebiet

Die Erfindung betrifft eine Druckwalze für eine Vorrichtung zum Zusammendrücken leerer Behälter, insbesondere Getränkeflaschen oder -dosen aus Kunststoff, insbesondere aus PET, oder Weißblech, nach dem Oberbegriff des Patentanspruches 1.

Derartige Druckwalzen und Vorrichtungen mit solchen Druckwalzen werden verwendet, um leere Behälter (Hohlkörper), insbesondere solche aus dem Lebensmittelbereich, wie Getränkeflaschen, Dosen u.ä. Behältnisse, zu kompaktieren. Somit wird für den Transport zu den Recyclinganlagen hin das Transportvolumen des Fahrzeuges besser genutzt; die Transportkosten werden verringert. Aber auch für den Recyclingprozess selbst sind kompaktierte Behältnisse von Vorteil.

### II. Technischer Hintergrund

Eine gattungsgemäße Kompaktiervorrichtung ist in der DE 85 15 290 U1 beschrieben. Diese Vorrichtung besitzt mindestens eine Walze zum Zusammendrücken und Perforieren von leeren Behältern, wobei von dem Grundkörper der Walze Stacheln radial abragen. Die Stacheln sind in radial ausgerichteten Aufnahmen des Walzengrundkörpers befestigt.

Eine weitere Vorrichtung zum Zusammendrücken leerer Behälter ist aus der US 2012 137904 A1 bekannt. Von in den Walzenkörper eingelassenen Ausnehmungen ragen Stacheln in Form von einschraubbaren Kegelstiften radial ab.

Auch bei einer Vorrichtung zum Zusammendrücken leerer Behälter nach der JP H11 70525 A werden die an einer Walze radial abragend angeordneten Elemente zum Perforieren der durch einen Spalt hindurch geförderten leeren Behälter genutzt.

Nach einer Ausführung einer Vorrichtung nach der EP 0 774 300 A1 sind die von der Mantelfläche einer Walze abragenden Elemente Messerleisten. Leere Behälter werden mit der Vorrichtung nach dieser Ausführung zusammengedrückt und zugleich in Partikel zerschnitten. Auch bei einer Vorrichtung nach der US 4,009,838 oder einer Vorrichtung nach der JP H11 290714 A werden die zugeführten leeren Behälter zerschnitten.

Bei einer Kompaktiervorrichtung zum Kompaktieren leerer Behälter nach der WO 2010/054615 A1 werden als radial abragende Stacheln Spiralspannstifte in die im Walzengrundkörper vorgesehenen Aufnahmen eingesetzt, was die Herstellungskosten senken soll.

In der DE 103 25 368 B4 ist eine Kompaktiervorrichtung für GetränkeBehälter in Form von Kunststoffflaschen und (Weiß-) Blechdosen offenbart, die zwei gegenläufig antreibbare Walzen umfasst, die parallel in einem Abstand zueinander angeordnet und derart ausgebildet sind, dass leere Behälter zwischen ihnen zusammengedrückt und deren zu den Walzen zeigenden Mantelflächen teilweise eingeschnitten werden. Zu diesem Zweck weist jede Walze mehrere Scheiben entlang einer Walzenachse auf. Ein Teil der Scheiben ist als Druckscheibe ausgebildet, der andere Teil der Scheiben als Schneidscheibe. Zudem sind die Walzen derart angeordnet, dass Schneidscheiben der einen Walze in Zwischenräume zwischen den Scheiben der anderen Walze eingreifen, also Schneidscheiben miteinander kämmen. Durch eine gegenläufige Bewegung der Walzen wird ein leerer Behälter in den Einzugsspalt zwischen den Walzen gezogen und durch die Vielzahl an Druck- und Schneidscheiben zusammengedrückt und teilweise eingeschnitten. Dies ermöglicht insbesondere auch das Kompaktieren von leeren, geschlossenen Behältern, ohne diese vorher perforieren zu müssen.

Am Markt besteht nach wie vor die Forderung nach effizienteren Vorrichtungen dieser Gattung.

### III. Darstellung der Erfindung

### Technische Aufgabe

Ausgehend von den Lösungen nach dem Stand der Technik soll eine Vorrichtung zum Zusammendrücken von leeren Hohlkörpern, insbesondere (Einweg-) Kunststoffflaschen und Metalldosen (Getränkebehälter), zumindest Baugruppen für solche Vorrichtungen, gefunden werden, welche eine Senkung der Herstellungskosten sowie der Betriebskosten bei der Anwendung bewirkt, insbesondere eine Energieeinsparung erzielt, zudem soll die Qualität der zusammengedrückten Hohlkörper / Behälter für den nachfolgenden Recycling-Prozess sowie die Entwertung von Pfand-Einwegbehältern verbessert werden.

### Lösung der Aufgabe

Die Aufgabe wird gelöst durch eine Druckwalze mit den Merkmalen des Patentanspruches 1 für eine gattungsgemäße Vorrichtung zum Zusammendrücken von (Einweg-) Hohlkörpern (Getränkebehälter), insbesondere von Kunststoffflaschen oder Blechdosen bzw. durch eine solche Vorrichtung, mit einer erfindungsgemäßen Druckwalze, mit den Merkmalen des Patentanspruches 6.

Die jeweils nachgeordneten Patentansprüche, die Ansprüche 2 bis 5 und 7, offenbaren Ausführungsbeispiele der erfindungsgemäßen Druckwalze bzw. der Vorrichtung nach der Erfindung.

Die Vorteile der Erfindung bestehen neben den Einsparungen bei der Herstellung, wie z.B. Fertigungsaufwand der Walzen, weniger Abstreifer, Montageaufwand der Vorrichtung und Energieeinsparung, auch in der Senkung der Betriebskosten beim Anwender, insbesondere durch Energieeinsparung von bis zu 50%, durch geringeren Wartungsaufwand und u.a. durch geringeren Verschleiß an den Walzen.

Darüber hinaus haben die zusammengedrückten Körper eine höhere Formstabilität, sodass in dem nachfolgenden Recyclingprozess unter anderem weniger Störungen bei der Förderung der zusammengedrückten Körper eintreten; in den Recyclingmaschinen selbst und auch zu den Recyclingmaschinen hin. Zudem werden beim Zusammendrücken der Behälter Knickkanten mit kleinem Radius in deren zusammengedrückter Körperwand und Boden weitestgehend vermieden, sodass die Anzahl von Weißbrüchen im Material, also in den Körperwänden der Behälter wesentlich verringert wird. Gleichzeitig ist jedoch gewährleistet, dass die Entwertung von Pfandbehältern zuverlässig ist, also der an den Behältern/Hohlkörpern angebrachte Barcode entwertet ist.

Eine bevorzugte Ausführung der Erfindung ist eine neu gestaltete Druckwalze, welche in der Peripherie ihres Arbeitsbereiches, also in ihrer Mantelfläche, in neuer Art profiliert ist. Diese neu gestaltete Druckwalze ist für eine Vorrichtung zum Zusammendrücken leerer (Einweg-) Hohlkörper (Getränkebehälter), insbesondere Kunststoffflaschen oder Blechdosen vorgesehen. Diese erfindungsgemäße Druckwalze ist die wenigstens eine rotierbare Walze in besagter Vorrichtung, welche unter Bildung eines Spaltes mit Abstand zu einem Gegenlager angeordnet ist. Der Spalt ist parallel zu der Achse der ersten Druckwalze angeordnet. Anfänglich ist dieser Spalt der Einzugsspalt, dann - direkt zwischen der Druckwalze und dem Gegenlager - der Arbeitsspalt und sodann der Austrittsspalt, der in einer im Gehäuse der Vorrichtung vorgesehenen Austrittsöffnung mündet.

Die im Wesentlichen zylinderförmige Mantelfläche des Walzengrundkörpers dieser neuen Druckwalze besitzt in einer ersten Ausführungsvariante in ihrem Arbeitsbereich in axialer Richtung mehrere profilierte Teil-Bereiche gleicher Art und gleicher Breite, wobei diese profilierten Teil-Bereiche jeweils durch eine, die Mantelfläche unterbrechende, umlaufende Ausnehmung im Walzengrundkörper voneinander getrennt sind. Zudem weist jeder dieser profilierten Teil-Bereiche - axial gesehen - einen ersten, einen zweiten und einen dritten Abschnitt. In einem dieser Abschnitte ist wenigstens ein von der Mantelfläche radial abragender, nockenförmiger Vorsprung angeordnet. Dieser Abschnitt mit einem nockenförmigen Vorsprung ist vorzugsweise der mittlere Abschnitt.

Erfindungsgemäß sind in jedem betreffenden Abschnitt mehrere nockenförmige Vorsprünge angeordnet, welche gleichmäßig am Umfang dieser Abschnitte verteilt vorgesehen sind. Diese nockenförmigen Vorsprünge sind zugleich derart, dass sie Perforationselemente sind.

Eine weitere bevorzugte Ausführungsform dieser ersten Druckwalze ist derart, dass die Abschnitte neben dem Abschnitt mit dem bzw. den nockenförmigen Vorsprüngen jeweils als Druckflächen ausgebildet sind. Vorzugsweise sind diese Druckflächen gleich breit, bevorzugt gleich der Breite des Abschnittes mit den nockenförmigen Vorsprüngen, wenigstens halb so breit wie der Abschnitt mit den nockenförmigen Vorsprüngen.

Jeder nockenförmige Vorsprung der ersten Druckwalze ist - in Drehrichtung der Walze betrachtet -vorzugsweise zahnförmig ausgebildet. Nach der Erfindung ist der kopfseitige Kantenbereich jedes Vorsprunges zu seiner jeweiligen Seitenfläche hin eine geneigte fasenförmige Schrägfläche, die in ihrer Breite wesentlich größer ist als eine normale Kantenfase. Vorzugsweise ist diese fasenförmige Fläche wenigstens größer als 0,8 mm breit und reicht maximal bis zur halben Höhe eines nockenförmigen Vorsprunges herab.

Nach einer anderen bevorzugten Ausführungsform ist jeder nockenförmige Vorsprung der erfindungsgemäßen Druckwalzen auch derart, dass er zugleich ein Brechelemente für Glasflaschen sein kann.

Bevorzugt sind die Druckwalzen nach der Erfindung aus Vollmaterial und Vergütungsstahl gefertigt und ihre Mantelfläche nebst den abragenden Perforationselementen sind zumindest oberflächengehärtet.

Eine weitere Ausführungsform der Erfindung ist derart, dass die in der Grundausführung der Erfindung im kopfseitigen Kantenbereich der nockenförmigen Vorsprünge angeordnete Schrägfläche nunmehr an den jeweiligen Kantenbereich angeordnet ist, welcher durch die jeweilige Seitenflanke der umlaufenden Ausnehmung in der Mantelfläche und dem angrenzenden ersten Abschnitt bzw. dem angrenzenden dritten Abschnitt eines jeden Teil-Bereiches des Arbeitsbereiches jeder Druckwalze gebildet ist. Hierdurch wird das Einzugsverhalten insbesondere bei Kunststoffflaschen und Blechdosen verbessert, da die durch die bei der zweiten Ausführungsform der Erfindung vorgesehenen, durch Längsnuten gebildeten zusätzlichen Druckkanten quasi verlängert werden.

### Ausführungsbeispiele

Die Erfindung wird anhand von schematisch in Zeichnungen gezeigten, bevorzugten, die Erfindung jedoch nicht einschränkenden, Ausführungsbeispielen näher und in Details erläutert. Es zeigen
- Fig. 1: eine schematische Seitenansicht einer Vorrichtung nach der Erfindung;
- Fig. 1a: die Vorrichtung nach Fig. 1 mit zugeführten Hohlkörpern;
- Fig. 2: eine erfindungsgemäße Druckwalze in einer ersten Ausführungsform in Seitenansicht;
- Fig. 2a, 2b, 2c: Details der Druckwalze nach Fig. 2;
- Fig. 3: eine Druckwalze nach Fig. 1 in Zusammenwirken mit einem Gegenlager in Form einer zweiten, gleichartigen Druckwalze;
- Fig. 3a: Details zu Fig. 3;
- Fig. 4: eine Schnittdarstellung von Fig. 3;
- Fig. 5: eine Druckwalze nach der Erfindung in einer zweiten Ausführungsform;
- Fig. 5a, 5b, 5c: Details zu Fig. 5;
- Fig. 6: ein Gegenlager in Ausbildung als eine zweite Druckwalze zweiter Ausführungsform in Zusammenwirken mit einer ersten Druckwalze;
- Fig. 6a: einen Schnitt durch die Druckwalzen gemäß Fig. 6;
- Fig. 7: eine perspektivische Ansicht einer zweiten Druckwalze zweiter Ausführung nach Fig. 6;
- Fig. 7a: die Einzelheit D der Fig. 7, den nockenartigen Vorsprung der Druckwalzen in Perspektive und
- Fig. 8, 8a, 8b: eine Druckwalze nach der Erfindung in einer dritten Ausführung in verschiedenen Ansichten.
Zunächst soll der Beschreibung voraus geschickt werden, dass Begriffe wie "oben", "unten", "links" und "rechts" sich nur auf die betreffenden Figuren beziehen und somit von der Realität abweichen können. Auch können die Proportionen in der Realität abweichend zu den Figuren sein. Ferner sind die Figuren keine exakten technischen Zeichnungen, sondern sollen lediglich den Charakter der Erfindung zeigen. Bezüglich der Bezugszeichen ist auszuführen, dass gleiche Nummern in den verschiedenen Figuren auch immer gleiche Bauteile bezeichnen. In der Beschreibung nicht erwähnte Bezugszeichen ergeben sich aus der Bezugszeichenliste oder aus der Erwähnung in einer anderen Figur dieser Offenbarung.

Die in den Figuren angezogenen Bezugsziffern haben jeweils die gleiche Bedeutung, auch wenn sie in der Beschreibung der Ausführungen nicht zu jeder Figur ausdrücklich genannt werden.

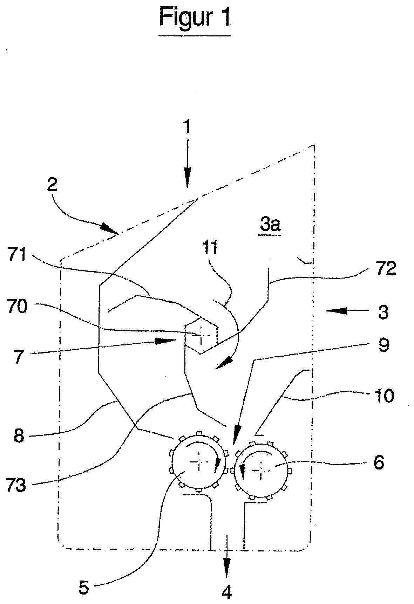

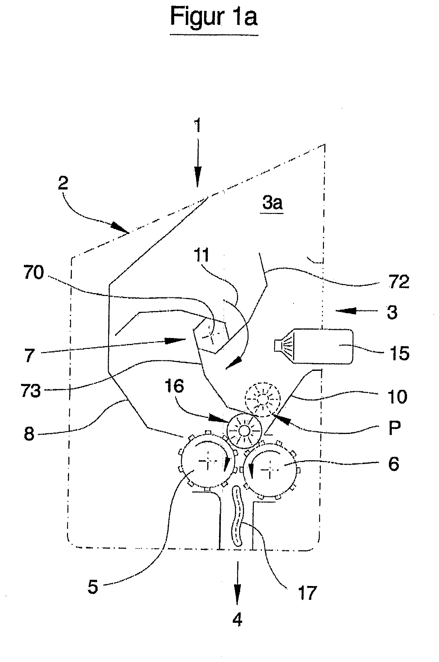

Eine schematische Seitenansicht einer Vorrichtung mit einer erfindungsgemäßen Druckwalzen 5 und eine erfindungsgemäße Druckwalze 6 ist in den Figuren 1 und 1a gezeigt.
In einem Gehäuse 2 ist an einer Seite in einem oberen Bereich eine Einfüllöffnung 3 vorgesehen, für den Einwurf von zu recycelnden besagten Behältern/Hohlkörpern. Im oberen inneren Bereich befindet sich ein Zufuhrraum 3a, im unteren Bereich dieses Gehäuses 2, im Anschluss an den Zufuhrraum 3a ist die erste Druckwalze 5 angeordnet und ihr gegenüber liegend parallel und mit Abstand das Gegenlager 6, welches bei dieser Ausführung der erfindungsgemäßen Vorrichtung ebenfalls eine Druckwalze nach der Erfindung ist.

Die Druckwalze 5 und das Gegenlager 6, hier die Druckwalze 6, bilden zwischen sich einen Spalt 9. Er ist Einzugs- und Arbeitsspalt zugleich. Die zusammenzudrückenden Behälter 15, 16 usw. werden nacheinander folgend über die Einfüllöffnung 3 in den Zuführraum 3a eingeführt und rutschen über die Rutsche 10 zu dem Einzugsspalt 9 hin. Eine Mitnahmeeinheit 7 ist im Zuführraum 3a angeordnet und unterstützt mit je einem ihrer Flügel 71, 72 bzw. 73, die sich gemäß Pfeil 11 bewegen, das Zuführen der eingeworfenen
Behälter 15 bzw. 16 zu dem Einzugsspalt 9 hin, wobei diese Flügel den Behälter in Richtung des Spaltes 9 schieben und zugleich an diesen Einzugsspalt andrücken, solange sie Kontakt mit dem Behälter haben.

In der Darstellung nach der Figur 1a ist es der Flügel 73, der den Behälter/Hohlkörper 16 an die Druckwalzen 5 und 6 und in den Einzugsspalt 9 drückt. Der nachfolgend zugeführte Behälter 15 ist in zwei Positionen gezeigt. Einmal beim Einwurf und in einer zeitlich späteren Position P; hier ist der in Längsrichtung eingeführte Behälter 15 mit gestrichelter Linie zur Unterscheidung gezeichnet. Er liegt nunmehr quer, also in seiner Längsausrichtung parallel zu den Druckwalzen und dem Einzugsspalt und wartet in dieser Position P auf die Übergabe an den Einzugsspalt 9 durch voranschreitendes Nachrutschen entlang der Rutsche 10 und/oder der Rückseite des Flügels 73. Der nachfolgende Flügel 72 wird dann bei weiterer Drehung der Mitnahmeeinheit um ihre Drehachse 70 den Behälter 15 ebenso an den Einzugsspalt 9 heran und in ihn hinein drücken, wie es in dieser Figur bezüglich dem Behälter 16 dargestellt ist.

Bevorzugt ist die Mitnahmeeinheit 7 ein Separator gemäß der EP 2 292 333 A2 bzw. der US 7,540,235 B2.

Nicht dargestellt sind hier ein Getriebe und ein Motor sowie eine Steuerungseinheit, welche zum Betrieb der Vorrichtung benötigt werden und hier ebenfalls vorgesehen sind, da hierfür bekannte Baugruppen eingesetzt werden.

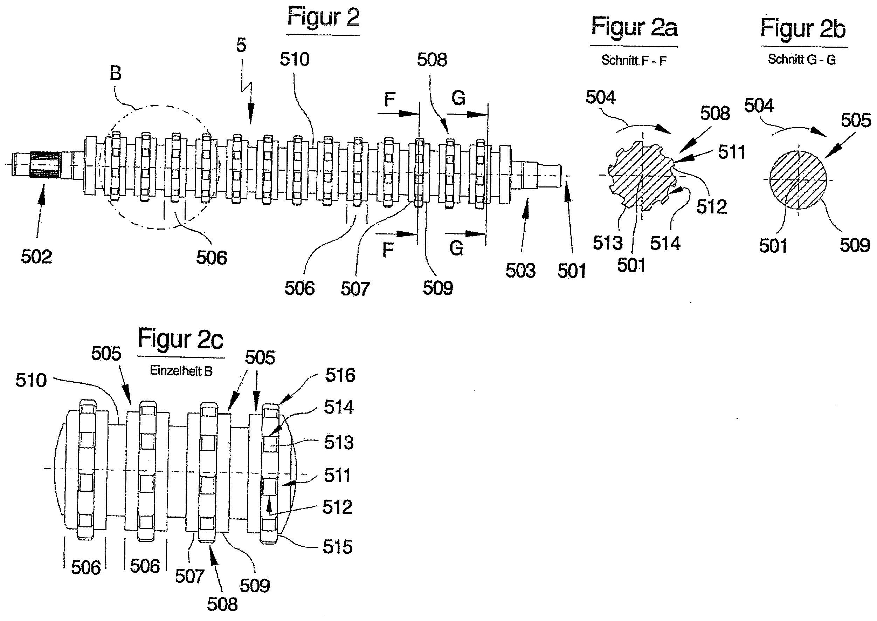

In den Figuren 2 bis 2c ist eine erste bevorzugte Ausführungsvariante einer Druckwalze nach der Erfindung gezeigt, und zwar die erste Druckwalze 5. Anhand dieser wird der grundsätzliche Aufbau der neu gestalteten Druckwalze 5 erläutert. Zwischen einem ersten Endabschnitt 502 und einem gegenüber liegenden zweiten Endabschnitt 503 ist der Arbeitsbereich der Druckwalze 5 vorgesehen. Mit dem Bezugszeichen 501 ist die Drehachse der ersten Druckwalze 5 bezeichnet. Im Arbeitsbereich ist die Mantelfläche 505 dieser ersten Druckwalze 5 im Wesentlichen zylinderförmig. Der Arbeitsbereich besitzt entlang seiner zylinderförmigen Mantelfläche 505 in axialer Richtung mehrere nebeneinander angeordnete profilierte Teil-Bereiche 506 mit gleicher Breite und gleicher Art. Diese profilierten Teil-Bereiche 506 sind jeweils durch je eine im Grundkörper der Druckwalze 5 vorhandene umlaufende Ausnehmung 510 voneinander räumlich getrennt.

Jeder dieser profilierten Teil-Bereiche 506 ist - axial gesehen - in mehrere Abschnitte unterteilt; in einen ersten Abschnitt 507, einen zweiten 508 und einen dritten 509. Wenigstens einer dieser Abschnitte, bevorzugt der zweite, der mittlere Abschnitt 508, besitzt wenigstens einen von der Mantelfläche 505 radial abragenden nockenförmigen Vorsprung 511. Erfindungsgemäß sind mehrere nockenförmige Vorsprünge 511 gleichmäßig am Umfang jedes mittleren Abschnittes 508 verteilt angeordnet.

Diese nockenförmigen Vorsprünge 511 haben die Gestalt eines technischen Zahnes. Zu den Details der Gestaltung dieses zahnförmigen, nockenförmigen Vorsprunges 511 wird weiter hinten noch im Detail erläutert.

Die Mantelfläche 505 dieser ersten Druckwalze 5 ist in ihren Abschnitten 507 und 509 jedes Teil-Bereiches 506 als Druckfläche ausgebildet, quasi sind im gesamten Arbeitsbereich der Druckwalze 5 mehrere Druckflächen mit radial gleicher Höhe vorhanden.

Rechts neben der Figur 2 sind in den Figuren 2a und 2b jeweils Schnittdarstellungen entsprechend der Schnittführung F - F bzw. G - G in Fig. 2 gezeigt. In der Fig. 2a ist der Schnitt durch einen Abschnitt 508 geführt. Deutlich zu sehen ist hier die Ausbildung der zahnförmigen, nockenförmigen Vorsprünge 511. Diese nockenförmigen Vorsprünge 511 besitzen eine Stirnfläche 512, eine Kopffläche 513 und eine Rückenfläche 514 - in Drehrichtung 504 der ersten Druckwalze 5 gesehen, siehe auch Fig. 2c.

In der Fig. 2b ist der Schnitt durch einen Abschnitt 509 eines Teil-Bereiches 506 gezeigt. Die Umfangsfläche in diesem Abschnitt 509 ist durchgehend im Wesentlichen kreisförmig und bildet, wie bereits gesagt, eine umlaufende Druckfläche, welche mit dem Gegenlager 6 (siehe Fig. 1) zusammen arbeitet.

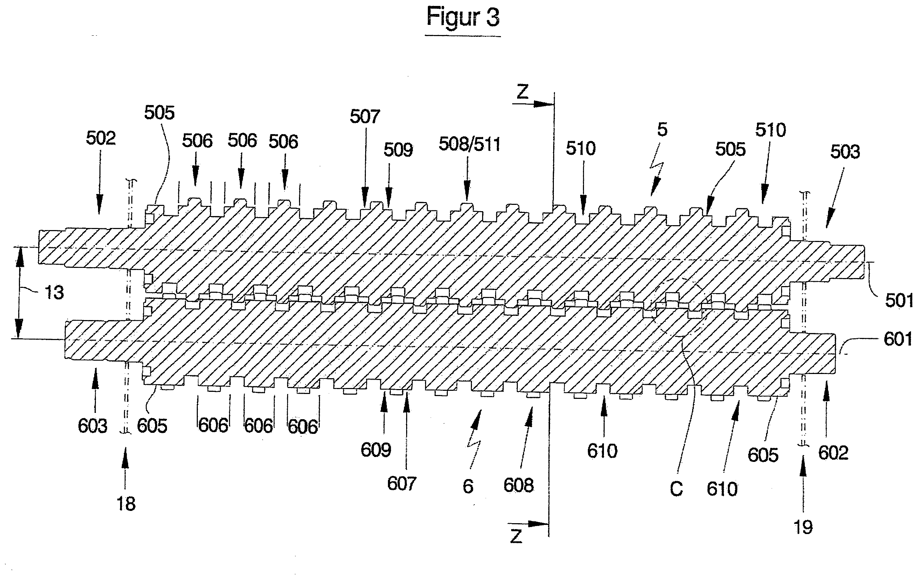

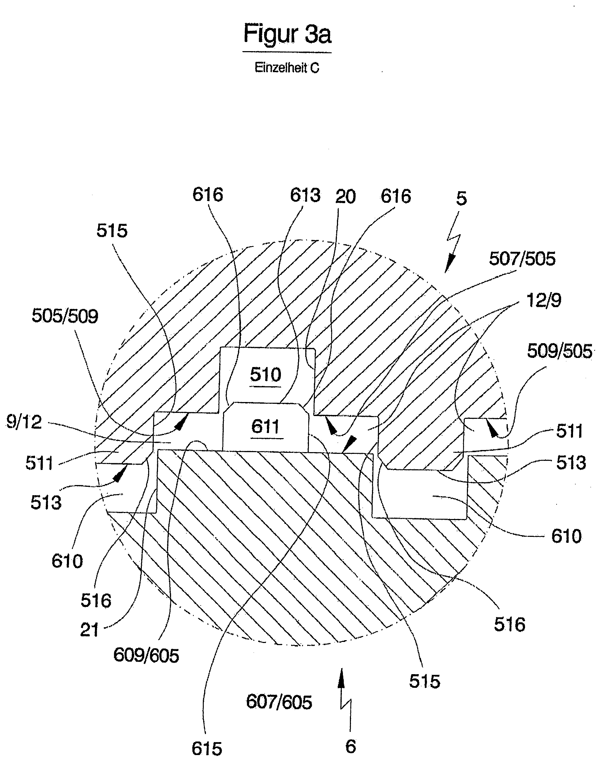

Zu erwähnen ist hier noch, dass in dem Gegenlager 6 für die nockenförmigen Vorsprünge 511 in entsprechender Tiefe und in entsprechendem Abstand Ausnehmungen 610 vorgesehen sind (siehe Figuren 3 und 3a), welche den umlaufenden Ausnehmungen 510 entsprechen.

Die nockenförmigen Vorsprünge 511 tauchen leicht in diese Ausnehmungen 610 im Gegenlager 6 ein. Im Zusammenwirken mit diesen Ausnehmungen 610 wird beim Eintritt, beim Hindurchlaufen und beim Austritt der nockenförmigen Vorsprünge 511 in diesen Bereichen des Gegenlagers 6 die zusammengedrückten Wandungen des Behälters 15, 16 leicht angeschnitten und durch Quetschung verformt, sodass Verhakungen zwischen den beiden nun aneinander anliegenden Wandungen des hindurchgeführten, platt gedrückten Behälters 17 - siehe Fig. 1a - entstehen.

In der Fig. 2c ist die Einzelheit B aus der Fig. 2 gezeigt. Es ist eine Vergrößerung, sodass die Details, welche voranstehend schon beschrieben wurden, noch deutlicher erkennbar sind.

In dem hier gezeigten bevorzugten Ausführungsbeispiel nach den Figuren 2 ist die Breite des linken, ersten Abschnittes 507 und des rechten, dritten Abschnittes 509, also der Abschnitte mit den Druckflächen, annähernd gleich breit wie die Breite des mittleren, zweiten Abschnittes 508, welcher die nockenförmigen Vorsprünge 511 besitzt. Im Speziellen ist hier die Breite der Abschnitte 507 und 509, also den Abschnitten mit der Druckfläche, etwa 0,8 mal so breit wie der mittlere Abschnitt 508 mit den nockenförmigen Vorsprüngen 511. In der Darstellung nach Fig. 2c ist auch erkennbar, dass bei dieser einen bevorzugten Ausführungsvariante jeder Bereich 506 gleichartig gestaltet ist und eine gleiche Breite hat. Lediglich in den Bereichen 506, welche unmittelbar an die beiden Endabschnitte 502 bzw. 503 anschließen, ist der zu diesen hingewandte Kantenbereich der Bereiche 506 etwas anders geformt.

In der Fig. 3 sind die in der Fig. 1 gezeigten beiden neuen erfindungsgemäßen Druckwalzen 5 und 6 weiter detailliert und in einem Längsschnitt entlang ihrer Drehachsen 501 bzw. 601 dargestellt. Die gezeigte erste Druckwalze 5 ist die in der Fig. 2 gezeigte erfindungsgemäße erste Druckwalze. Die in der Fig. 3 mit paralellem Achsabstand zu der ersten Druckwalze 5 angeordnete zweite Druckwalze 6, das Gegenlager, ist eine Druckwalze in Bauart der ersten Druckwalze 5 nach der Erfindung, lediglich deren Endabschnitte 602 und 603 sind anders gestaltet. Zudem wurde diese in ihrem Arbeitsbereich gleichartig wie die erste Druckwalze 5 geformte zweite Druckwalze 6 mit ihren Endabschnitten 602 und 603 um 180° gedreht, sodass bei dem vorgesehenen gegenläufigen Drehsinn beider Druckwalzen 5 und 6 in einer Vorrichtung nach der Erfindung jeweils die Stirnflächen 512 und 612 der nockenförmigen Vorsprünge 511 und 611 in Drehrichtung zeigen. Weiterhin sind die Bereiche 506 und 606 beider Druckwalzen so zueinander axial verschoben angeordnet, dass jeweils die nockenförmigen Vorsprünge 511 bzw. 611 geringfügig in die umlaufenden Ausnehmungen 610 der zweiten Druckwalze 6
bzw. in die umlaufenden Ausnehmungen 510 der ersten Druckwalze eintauchen können, siehe hierzu auch in die Einzelheit C der Figur 3, welche in Figur 3a gezeigt ist.

Der erste Endabschnitt 502 der ersten Druckwalze 5 und der zweite Endabschnitt 603 der zweiten Druckwalze 6 sowie der zweite Endabschnitt 503 der ersten Druckwalze 5 und der erste Endabschnitt 602 der zweiten Druckwalze 6 sind jeweils drehbar in Lagerplatten 18 bzw. 19 gehalten. Die Lagerplatten sind im Gehäuse 2 angeordnet. Außerhalb der Lagerplatten sind auf wenigstens einem der genannten Endabschnitte 502 und 603 oder 503 und 602 Übertragungselemente angeordnet, welche, betreffend der zu erzeugenden Drehung von zumindest einer der beiden Druckwalzen 5 und 6, von einem nicht gezeichneten Antrieb/Getriebe der Vorrichtung zum Zusammendrücken leerer Behälter nach der Erfindung angetrieben werden.

Die Einzelheit C der Fig. 3 wird in Fig. 3a in einem vergrößerten Maßstab gezeigt, sodass weitere Details der Erfindung genauer erkennbar sind. Diese Einzelheit C betrifft den Wirkbereich zwischen den Teil-Bereichen 506 der ersten Druckwalze 5 und den Teil-Bereichen 606 der zweiten Druckwalze 6, dem Gegenlager. Das Zusammenwirken dieser Teil-Bereiche ist hier anhand von zwei achsparallel gegenüber liegenden sowie axial nebeneinander angeordnete Teil-Bereichen 506 und 606 näher erläutert. Die nockenförmigen Vorsprünge 511 der ersten Druckwalze 5 tauchen bei ihrer Drehung um die Drehachse 501 zeitweilig in die umlaufende Ausnehmung 610 der zweiten Druckwalze 6 ein. Dazu ist der Abstand 13 - siehe Fig. 3 - zwischen den Drehachsen 501 und 601 so gewählt, dass die nockenförmigen Vorsprünge 511 der ersten Druckwalze 5 in die umlaufende Ausnehmung 610 nur geringfügig eintauchen, d.h. diese nockenförmigen Vorsprünge 511 tauchen nur mit ihren Schrägflächen 516 in die umlaufenden Ausnehmungen 610 ein. Die gleiche Situation ist gegeben, wenn die nockenförmigen Vorsprünge 611 der zweiten Druckwalze 6 (des Gegenlagers) in die umlaufenden Ausnehmungen 510 der ersten Druckwalze eintauchen. Auch hier tauchen die nockenförmigen Vorsprünge 611 nur mit ihren Schrägflächen 616 in die umlaufenden Ausnehmungen 510 der gegenüberliegenden ersten Druckwalze 5 ein. Hierdurch wird erreicht, dass der Überschneidungsbereich, also der kämmende Bereich, zwischen den nockenförmigen Vorsprüngen 511 bzw. 611 und den Kantenbereichen der umlaufenden Ausnehmungen 610 bzw. 510 nicht so ist, als würden zwei Schneidscheiben miteinander kämmen.

Beim Eintauchen eines nockenförmigen Vorsprunges 511 bzw. 611 in die gegenüber liegende umlaufende Ausnehmung 610 bzw. 510 der gegenüber liegenden Druckwalze erfolgt ein abschnittsweises Einschneiden der aneinander gedrückten Wandbereiche des zwischen diesen Druckwalzen 5 und 6 hindurchgeführten Behälters, jedoch ist dieses Einschneiden mit den erfindungsgemäßen Druckwalzen nur geringfügig und nicht in dem Umfang, wie es bei den Vorrichtungen nach dem Stand der Technik der Fall ist.

Zudem sind in dem Bereich der aneinander gedrückten Wandbereiche, die durch das Zusammendrücken eine fortlaufende Richtungsänderung erfahren, also mäandrieren, also an den jeweiligen umgelenkten Abschnitten keine scharfen Knicke vorhanden. In diesem Überlappungsbereich 9/12 erfolgt überwiegend ein Quetschen und geringes Ziehen in der Wand des hindurchgeführten Behälters, der hier plattenartig zusammengedrückt ist, also doppelwandig ist, und es erfolgt in den im Arbeitsspalt 9 zwischen den einander zugewandten Abschnitten (Druckflächen) 507 und 607 bzw. 509 und 609 gebildeten Druckräumen 12 ein quetschendes Zusammenpressen, wodurch Materialspannungen in dem Material des betreffenden Wandbereiches des hindurch geführten Körpers 15 bzw. 16, welche ein Reexpandieren bewirken könnten, durch nur verminderte Umformung beseitigt werden.

Auch der flächig ausgeführte Kopfbereich der nockenförmigen Vorsprünge 511 bzw. 611, die Kopfflächen 513 bzw. 613, wirken wie eine Druckwalze auf die Wandungen (Wandbereiche und Bodenbereich) der hindurch geführten Behälter 15, 16. Beim Eintauchen eines nockenartigen Vorsprunges 611 in eine umlaufende Ausnehmung 510 bzw. eines nockenförmigen Vorsprunges 511 in die gegenüber liegende umlaufende Ausnehmung 610 wird zunächst die doppelt liegende Wand des hindurch geführten Behälters 15 bzw. 16 zwischen den Schrägflächen 516 bzw. 616 und dem betreffenden Kantenbereich der umlaufenden Ausnehmung 510 bzw. 610 quetschend gehalten und durch die Kopffläche 513 bzw. 613 des dort gerade wirkenden nockenförmigen Vorsprunges 511 bzw. 611, welche als Druckfläche wirken, aneinander gezogen. Im zeitlich mittleren Abschnitt des Hindurchtretens des betreffenden nockenförmigen Vorsprunges 511 bzw. 611 durch die betreffende umlaufende Ausnehmung 610 bzw. 510 werden die Wandungen des hindurch geführten Körpers 15/16/17 abschnittsweise eingeschnitten, zugleich aber auch leicht gestreckt, sodass Verhakungen zwischen den eingeschnittenen und den dazu benachbarten Wandabschnitten des hindurch geführten Behälters entstehen. Im zeitlich letzten Abschnitt des Hindurchtretens erfolgt dann wieder, wie schon beschrieben, ein Festhalten im Bereich der Schrägflächen 616 bzw. 516 und das gleichzeitige Aneinanderziehen der Wandabschnitte.

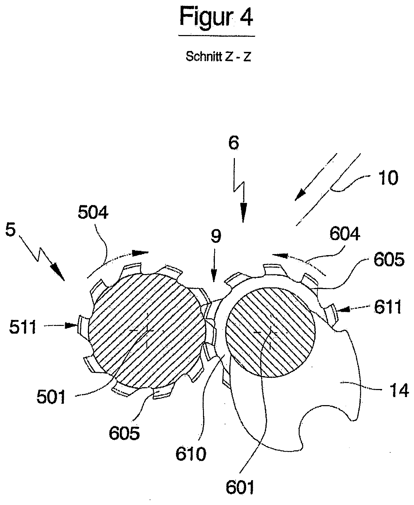

In der Darstellung nach der Fig. 4 ist die erste Druckwalze 5 nach der Erfindung, die mit einem Gegenlager in Form einer zweiten, gleichartigen Druckwalze 6 zusammen wirkt, in einem Querschnitt entlang der Schnittführung Z - Z (siehe Fig. 3) gezeigt. Zwischen den beiden sich einander gegenüber liegenden ersten Druckwalze 5 und zweiten Druckwalze 6 ist der Spalt 9 gebildet, welcher anfänglich ein Einzugsspalt ist, dann ein Arbeitsspalt wird und zum Schluss ein Austrittspalt ist.

Beide Druckwalzen 5 und 6 laufen gegenläufig, was mit den Pfeilen 504 und 604 gezeigt ist. Die zusammenzupressenden Behälter 15, 16 werden über die Rutsche 10 dem Einzugsspalt 9 zugeführt. Die in der Fig. 1 gezeigte Mitnahmeeinheit 7 drückt jeweils mit einem ihrer Flügel 71, 72, 73 einen zugeführten Behälter 15 bzw. 16 in Richtung des Einzugsspaltes 9 und drückt, solange er Kontakt mit dem Behälter hat, diesen in Richtung des Einzugsspaltes 9 an. In der Fig. 1a wird gerade der Behälter 16 von dem Flügel 73 zu dem Einzugsspalt 9 hin und in diesen hinein gedrückt.

Die nockenförmigen Vorsprünge 511 bzw. 611 der beiden Druckwalzen 5 und 6 erfassen den Behälter 15, 16 an seinen Wandbereichen und ziehen ihn weiter/tiefer in den Arbeitsspalt 9 ein, wobei, wie schon erwähnt, der an einem Behälter anliegende und drückende Mitnahmeflügel 71, 72 oder 73 der Mitnahmeeinheit 7 diesen Einzug unterstützt.

Die Bearbeitung, das Zusammendrücken des zugeführten Behälters 15 bzw. 16, erfolgt dann so, wie es im Zusammenhang mit der Erläuterung zu der Fig. 3a beschrieben ist. Zudem ist in dieser Darstellung nach Fig. 4 auch zu sehen, dass wenigstens in den umlaufenden Ausnehmungen 610 der zweiten Druckwalze 6 Abstreifer 14 eingesetzt sind. Diese Abstreifer 14 umgreifen teilweise die Grundfläche der umlaufenden Ausnehmung 610, sodass der zu einem plattenförmigen Gebilde zusammengedrückte Behälter 17 - siehe auch in Fig. 1a -, sofern er eventuell noch an den auf ihn einwirkenden nockenförmigen Vorsprüngen 511 bzw. 611 anhaftet, abgestreift wird und ein Umlaufen, im Sinne eines Mitnehmens an einer der Druckwalzen 5 oder 6 somit verhindert ist. Insbesondere wirken diese Abstreifer 14 auf Teilabschnitte eines zusammengedrückten Behälters ein, z.B. auf ein sich beim Zusammendrücken und Einschneiden gelösten Flaschenverschluss, welcher sich in einer der Ausnehmungen 510 bzw. 610 oder teilweise zwischen zwei benachbarten nockenförmigen Vorsprüngen 511 bzw. 611 verklemmt haben könnte.

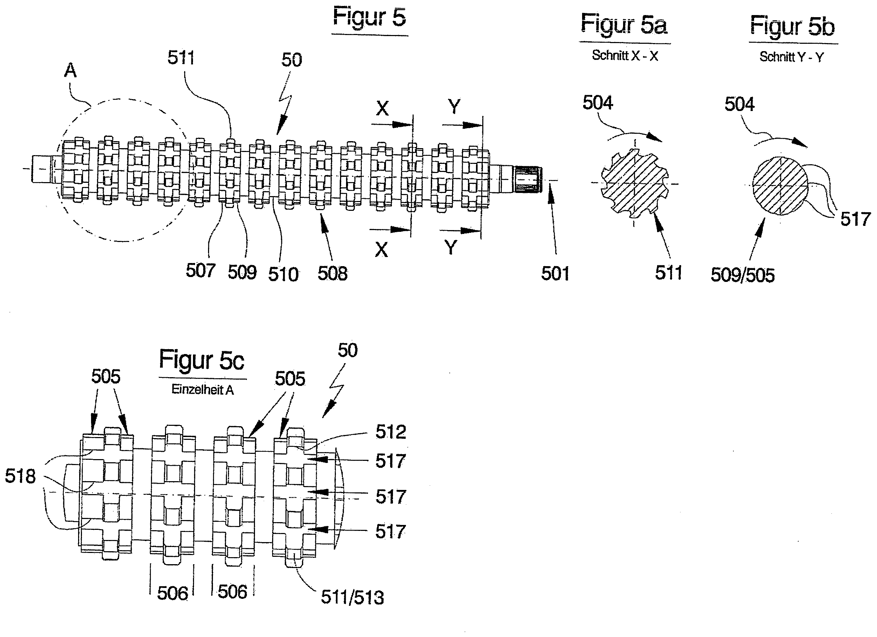

Eine weitere mögliche und auch bevorzugte Ausführungsvariante der erfindungsgemäßen Druckwalze ist in der Fig. 5 gezeigt. Diese erste Druckwalze 50 zweiter Art ist gleichartig aufgebaut wie die in der Fig. 2 gezeigte erste Druckwalze 5. Zusätzlich sind bei dieser ersten Druckwalze 50 zweiter Art in der Mantelfläche 505 ihres Arbeitsbereiches axial ausgerichtete Längsnuten 517 geringer Tiefe parallel zur Drehachse 501 angeordnet. Diese Längsnuten 517 verlaufen jeweils zwischen der Rückenfläche 514 eines nockenförmigen Vorsprunges 511 und der Stirnfläche 512 des folgenden nockenförmigen Vorsprunges 511. Hierdurch wird erreicht, dass die neben den nockenförmigen Vorsprüngen 511 vorhandenen Druckflächen in den Abschnitten 507 und 509 in Drehrichtung gesehen eine Druckkante 518 erhalten. Diese Druckkanten 518 wirken zugleich als Mitnehmer beim Einzug des zusammenzudrückenden Behälters 15 bzw. 16.

In der Fig. 5a ist ein Querschnitt des Schnittes X - X von der Fig. 5 gezeigt. Dieser Schnitt liegt in einem zweiten, mittleren Abschnitt 508 eines der Teil-Bereiche 506, welcher die nockenförmigen Vorsprünge 511 aufweist.

In der Fig. 5b ist ein Querscnitt entlang der Schnittführung Y - Y in der Fig. 5 gezeigt. Dieser Schnitt führt durch einen Abschnitt mit Druckflächen, hier ein rechts von einem Abschnitt 508 liegender dritter Abschnitt 509.

In der Fig. 5c ist dann die Einzelheit A aus der Fig. 5 vergrößert gezeigt. Auch hier ist deutlich erkennbar, dass die jeweils durch umlaufende Ausnehmungen 510 voneinander in axialer Richtung getrennten Teil-Bereiche 506 des Arbeitsbereiches dieser ersten Druckwalze 50 zweiter Art gleicher Form und gleicher Breite sind.

Zudem ist hier noch deutlicher die Anordnung der Längsnuten 517 erkennbar, welche die Mantelfläche 505 in den
Abschnitten 507 und 509 durchgreift, sodass jeweils auf den Umfang eines solchen Abschnitt 507 bzw. 509 gesehen, eine Vielzahl nacheinander folgender und je zueinander durch eine geringe Vertiefung beabstandete Druckflächen gebildet sind, wodurch während des Hindurchziehens des Behälters 15 bzw. 16 durch den Arbeitsspalt 9 abschnittsweise eine zeitweilige und geringe Druckentlastung auf die zusammengedrückten, aneinander anliegenden Wandabschnitte des Behälters 15 bzw. 16 eintritt, wodurch insgesamt die Qualität der Pressung des Behälters zu einem plattenförmigen Gebilde verbessert ist.

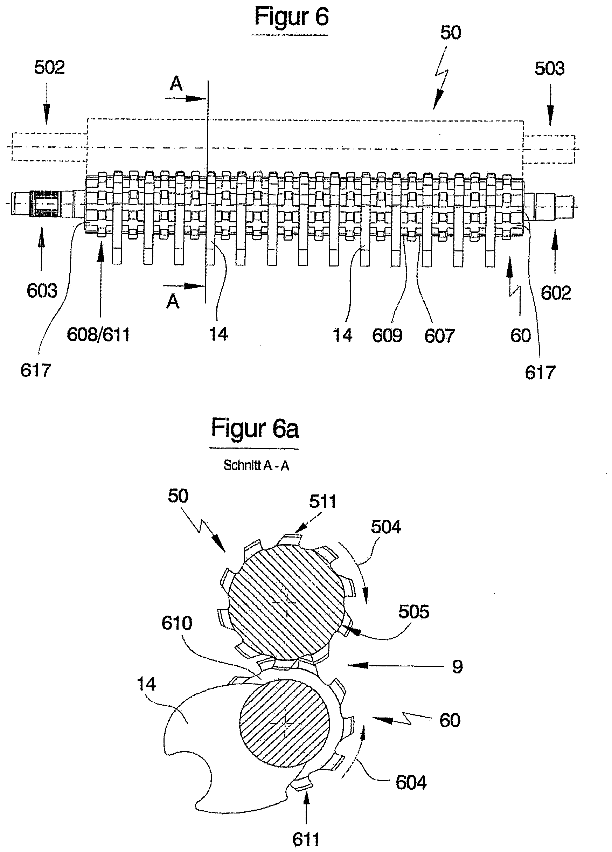

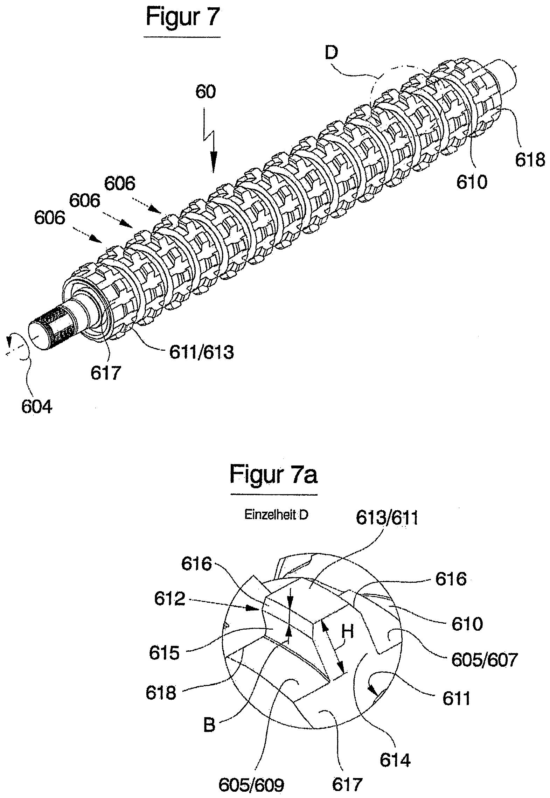

In der Fig. 6 ist eine weitere bevorzugte Ausführungsform der erfindungsgemäßen Druckwalze gezeigt. Und zwar ist hier die zweite Druckwalze 60, das Gegenlager, in einer zweiten Art gestaltet. Prinzipiell entspricht diese Gestaltung der ersten Druckwalze 50 zweiter Art, d.h., in dieser zweiten Druckwalze 60 zweiter Art sind ebenfalls, axial ausgerichtet und mit Abstand zueinander angeordnet, mehrere Längsnuten 617 in der Mantelfläche 605 vorgesehen, welche parallel zu der Drehachse 601 sind. Diese Längsnuten 617 liegen jeweils zwischen nacheinander folgenden nockenförmigen Vorsprüngen 611. Diese Längsnuten 617 haben ebenfalls eine geringe Tiefe, unterbrechen die in den Abschnitten 607 und 609 gebildeten Druckflächen, sodass in jedem Abschnitt 607 und 609 am Umfang dieser Abschnitte eine Vielzahl von Druckflächen angeordnet sind, die in Drehrichtung 604 gesehen jeweils eine Druckkante 618 besitzen - siehe Fig. 7a. Die Funktion dieser Druckkanten 618 ist gleich den Druckkanten 518, welche weiter vorn zusammen mit den Darstellungen in den Figuren 5 bis 5c bereits beschrieben wurden.

Ebenso wie die Fig. 4 zeigt die Fig. 6a einen Querschnitt, hier durch die zwei Druckwalzen 50 und 60 zweiter Art, hier in der Schnittführung A - A der Fig.6. Auch hier ist erkennbar, dass im Bereich des Spaltes 9, insbesondere in dessen Bereich, welcher den Arbeitsspalt bildet, der Kopfbereich der nockenförmigen Vorsprünge 611 bzw. 511 nur geringfügig in die gegenüber liegende umlaufende Ausnehmung 510 bzw. 610 der jeweils gegenüber liegenden Druckwalze 50 bzw. 60 eintauchen. Auch hier gilt Gleiches, was schon im Zusammenhang mit der weiter vorn bereits erfolgten Beschreibung der Ausführung der Erfindung nach Fig. 3a erläutert wurde.

Die Darstellung in der Fig. 7 zeigt eine perspektivische Ansicht einer zweiten Druckwalze 60 zweiter Art gemäß der Fig. 6. Die Einzelheit D dieser Darstellung, welche in der Fig. 7a vergrößert gezeigt ist, zeigt einen der mehrfach vorgesehenen nockenförmigen Vorsprünge 611 und seinen Details. Jeder dieser nockenförmigen Vorsprünge 611 ist in Umlaufrichtung 604 mit einer Stirnfläche 612 begrenzt. Diese Stirnfläche 612 fällt nicht lotrecht zur Drehachse 601 hin, sondern ist geringfügig gegen die Umlaufrichtung 604 geneigt angeordnet, sodass hier - schneidtechnisch gesehen - quasi eine Freifläche an einer Schneidkante gebildet wird. Kopfseitig besitzt der nockenförmige Vorsprung 611 eine Kopffläche 613, welche an ihrem Ende in eine Rückenfläche 614 übergeht, die radial nach innen gerichtet verläuft. Seitlich ist der nockenförmige Vorsprung 611 durch Seitenflächen 615 begrenzt. Beidseits sind im jeweiligen Kantenbereich zwischen diesen Seitenflächen 615 und der Kopffläche 613 fasenförmige Schrägflächen 616 angeordnet. Die Breite dieser Schrägflächen 616 ist mit dem Bezugszeichen 8 markiert. Erfindungsgemäß ist der Betrag dieser Breite B wenigstens größer als 0,7 mm und vorzugsweise größer als 2,5 mm. Die von der jeweiligen Schrägfläche 616 und jeweiligen Seitenfläche 615 erzeugte Kante endet jedoch spätestens in der Hälfte der in der Figur 7a angezeigten Höhe H. Der Winkel der Neigung dieser Schrägflächen 16 ist bezüglich der Senkrechten, also radial zur Drehachse gesehen, zwischen 45° und 20°, vorzugsweise zwischen 40° und 30°.

Die Seitenflächen 615 enden körpereinwärts an der Mantelfläche 605 der Abschnitte 609 bzw. 607.

Zu erwähnen ist noch, dass auch die nockenförmigen Vorsprünge 511 der ersten Druckwalze 5 und die nockenförmigen Vorsprünge 511 der ersten Druckwalze 50 zweiter Art gleichartig ausgebildet sind, wie die in den Figuren 7 und 7a detailliert gezeigten nockenförmigen Vorsprünge 611. Den betreffenden Flächen an den nockenförmigen Vorsprüngen 511 sind somit entsprechende Bezugsziffern zugeordnet, also 512 bis 516, siehe auch in die Figuren 2c, 3a und 5c.

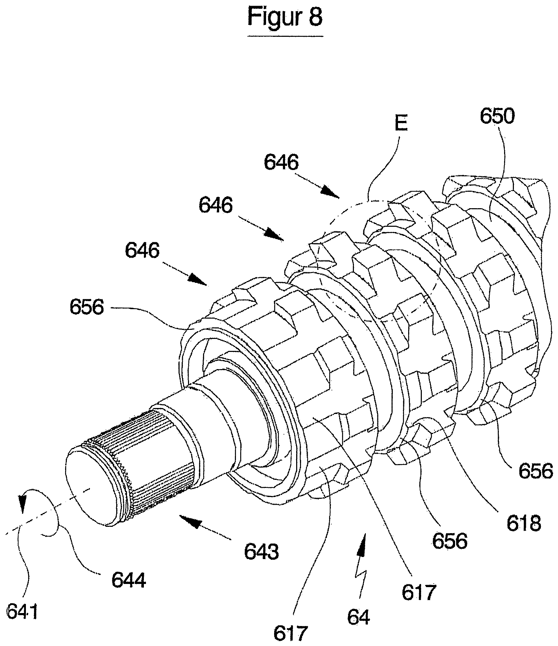

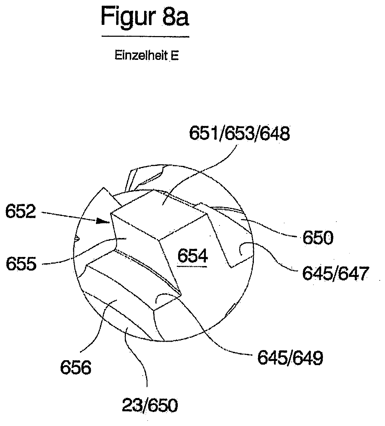

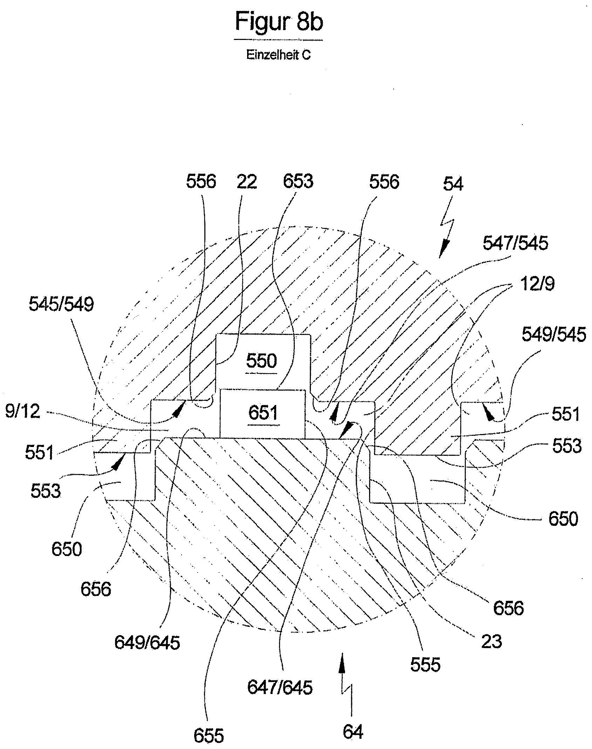

Eine weitere Ausführungsvariante der Erfindung einer Druckwalze dritter Art wird folgend anhand der schematischen Darstellungen der Figuren 8, 8a und 8b gezeigt und erläutert. Diese dritte Ausführung der Erfindung ist an einer ersten Druckwalze 54 dritter Art und auch an einer zweiten Druckwalze 64 dritter Art ausgeführt. In den
Figuren 8 und 8a wird diese dritte Ausführungsvariante der Erfindung anhand der gezeigten zweiten Druckwalze 64 dritter Art erläutert. In der Figur 8b sind dann Teil-Bereiche der zueinander liegend angeordneten ersten Druckwalze 54 dritter Art und zweiten Druckwalze 64 dritter Art gezeigt, so wie dies schon in der Fig. 3a bezüglich der ersten Druckwalze und der zweiten Druckwalze 6 gezeigt ist.

Die Darstellung in der Fig. 8 zeigt eine perspektive Ansicht einer zweiten Druckwalze 64 dritter Art. Die Einzelheit E dieser Darstellung, welche in der Figur 8a vergrößert gezeigt ist, zeigt einen der mehrfach vorgesehenen nockenförmigen Vorsprünge 651 und seine Details. Jeder dieser nockenförmigen Vorsprünge 651 ist in Umlaufrichtung 644 - siehe Fig. 8 - mit einer Stirnfläche 652 begrenzt. Diese Stirnfläche 652 fällt ebenfalls nicht lotrecht zur Drehachse 641 (siehe Fig. 8) hin, sondern ist ebenfalls geringfügig gegen die Umlaufrichtung 644 geneigt angeordnet, sodass hier
- schneidtechnisch gesehen - quasi eine Freifläche an einer Schneidkante gebildet wird. Kopfseitig besitzt der nockenförmige Vorsprung 651 eine Kopffläche 653, welche an ihrem Ende in eine Rückenfläche 654 übergeht, die körpereinwärts gerichtet verläuft. Seitlich ist jeder nockenförmige Vorsprung 651 durch Seitenflächen 655 begrenzt. Axial links und rechts von den nockenförmigen Vorsprüngen 651 sind jeweils ein erster Abschnitt 647 und ein dritter Abschnitt 649 an der Mantelfläche 645 vorgesehen. Der zwischen diesen beiden Abschnitten liegende zweite Abschnitt, also der, an welchem jeweils der nockenförmige Vorsprung 651 ausgebildet ist, hat das Bezugszeichen 648. Auch bei dieser dritten Ausführungsvariante der Erfindung bilden die nebeneinander liegenden Abschnitte 647, 648 und 649 jeweils einen Teil-Bereich 646. Die zweite Druckwalze 64 dritter Art und die erste Druckwalze 54 dritter Art besitzen ebenso wie die bereits beschriebenen erfindungsgemäßen Druckwalzen 5, 6, 50 und 60 mehrere Teil-Bereiche, die Teil-Bereiche 546 bzw. Teil-Bereiche 646, die in axialer Richtung nebeneinander angeordnet sind und jeweils durch eine umlaufende Ausnehmung 550 bzw. 650 räumlich voneinander beabstandet sind.

Die nach der Erfindung vorgesehenen fasenförmigen Schrägflächen sind hier, anders als bei den erfindungsgemäßen
Druckwalzen 5, 6, 50 und 60, an tiefer liegenden Kantenbereichen angeordnet, welche je durch eine der Seitenflanken 22, 23 der umlaufenden Ausnehmungen 550, 650 und der jeweils angrenzenden Mantelfläche 545, 645 der ersten Abschnitte 547, 647 bzw. der dritten Abschnitte 549, 649 gebildet werden. Diese fasenförmigen Schrägflächen der dritten Ausführung der Erfindung sind mit dem Bezugszeichen 556 bzw. 656 bezeichnet.

Bezüglich der Höhe und Breite sowie des Winkels der Neigung dieser fasenförmigen Schrägflächen gilt Gleiches, wie es schon zu den fasenförmigen Schrägflächen 516 und 616 der
Druckwalzen 5, 6, 50 und 60 weiter vorn in der Beschreibung erläutert wurde.

In der Fig. 8b ist die Einzelheit C der Figur 3 bezogen auf die Verwendung von Druckwalzen nach der dritten Ausführung gezeigt. In der Fig. 8b sind also die zueinander liegend angeordneten Druckwalzen 54 und 64 in einem Teil-Bereich, und zwar in deren gemeinsamem Wirkbereich, gezeigt.

Das Zusammenwirken dieser Teil-Bereiche ist hier anhand von zwei achsparallel gegenüber liegenden sowie axial nebeneinander angeordneten Teil-Bereichen 546 und 646 näher gezeigt. Die nockenförmigen Vorsprünge 551 der ersten Druckwalze 54 dritter Art tauchen bei ihrer Drehung um die Drehachse zeitweilig in die umlaufende Ausnehmung 650 der zweiten Druckwalze 64 dritter Art ein. Dazu ist der Abstand 13 - siehe Fig. 3 - zwischen ihren Drehachsen so gewählt, dass die nockenförmigen Vorsprünge 551 der ersten Druckwalze 54 dritter Art in die umlaufende Ausnehmung 650 der gegenüberliegenden Druckwalze 64 nur geringfügig eintauchen, d.h. diese nockenförmigen Vorsprünge 551 tauchen vorzugsweise nur bis zum Ende der Schrägflächen 656 der umlaufenden Ausnehmungen 650 ein. Die gleiche Situation ist gegeben, wenn die nockenförmigen Vorsprünge 651 der zweiten Druckwalze 64 dritter Art (des Gegenlagers) in die umlaufenden Ausnehmungen 550 der ersten Druckwalze 54 dritter Art eintauchen. Auch hier tauchen die nockenförmigen Vorsprünge 651 vorzugsweise nur bis zum Ende der Schrägflächen 556 der umlaufenden Ausnehmungen 550 der gegenüberliegenden ersten Druckwalze 54 dritter Art ein. Hierdurch wird erreicht, dass der Überschneidungsbereich, also der kämmende Bereich, zwischen den nockenförmigen Vorsprüngen 551 bzw. 651 und den Kantenbereichen der umlaufenden Ausnehmungen 650 bzw. 550 nicht so ist, als würden zwei Schneidscheiben miteinander kämmen.

Beim Eintauchen eines nockenförmigen Vorsprunges 551 bzw. 651 in die gegenüber liegende umlaufende Ausnehmung 650 bzw. 550 der gegenüber liegenden Druckwalze 64 bzw. 54 erfolgt ein abschnittsweises Einschneiden der aneinander gedrückten Wandbereiche des zwischen diesen Druckwalzen 54 und 64 hindurchgeführten Behälters, jedoch ist - wie bereits schon weiter vorn beschrieben - dieses Einschneiden mit den erfindungsgemäßen Druckwalzen nur geringfügig und nicht in dem Umfang, wie es bei den Vorrichtungen nach dem Stand der Technik der Fall ist.
Die fasenförmigen Schrägflächen 556 bzw. 656 in Ausführung nach der Erfindung wirken hier ebenso wie die fasenförmigen Schrägflächen 516 und 616 an den nockenförmigen Vorsprüngen 511 und 611 gemäß der ersten und zweiten Ausführungsvariante, welche weiter vorn schon beschrieben wurden.

Die Erfindung ist nicht auf das dargestellte und beschriebene Ausführungsbeispiel beschränkt, sondern umfasst insbesondere auch Varianten, die durch Kombination von in Verbindung mit der vorliegenden Erfindung beschriebenen Merkmale bzw. Elementen gebildet werden können. Weiterhin können einzelne, in Verbindung mit den Figuren beschriebene Merkmale bzw. Funktionsweisen für sich allein genommen eine selbständige Erfindung darstellen. Der Anmelder behält sich also vor, noch weiter bisher nur in der Beschreibung, insbesondere in Verbindung mit den Figuren offenbarte Merkmale von erfindungswesentlicher Bedeutung zu beanspruchen. Die mit der Anmeldung eingereichten Patentansprüche sind somit lediglich Formulierungsvorschläge ohne Präjudiz für die Erzielung weitergehenden Patentschutzes.

Eine nicht gezeigte, jedoch im Rahmen der beanspruchten Erfindung liegende Ausführungsvariante kann darin bestehen, dass das Gegenlager nicht durch eine rotierbare Walze gebildet wird, sondern stattdessen ein Walzensegment entsprechender Größe einer rotierbaren ersten Druckwalze unter Bildung des besagten Spaltes 9 (Einzugsspalt und Arbeitsspalt) zugeordnet ist. Bei dieser Ausführungsvariante ist das Gegenlager, das Walzensegment, stationär, es dreht sich also nicht.

Eine weitere, nicht gezeigte, jedoch auch im Rahmen der beanspruchten Erfindung liegende Ausführungsvariante besteht darin, dass die eine der beiden Druckwalzen nach der Erfindung nicht um 180° gedreht angeordnet ist, wie es in der Fig. 3 gezeigt und zu dieser weiter vorn stehend beschrieben ist. Bei dieser Ausführungsvariante zeigen also bei der einen Druckwalze die Stirnflächen der nockenförmigen Vorsprünge in Drehrichtung und bei der zweiten Druckwalze zeigen die Rückflächen der nockenförmigen Vorsprünge in Drehrichtung. Diese Ausführung wird je nach Anwendungsfall gewählt und kann vorteilhaft sein, wenn das Material der zusammendrückenden Behälter von den üblichen Materialien abweicht, z.B. weicher ist oder härter ist oder ein anderes Dehnverhalten besitzt als üblich.

Eine weitere, nicht gezeigte, jedoch auch im Rahmen der beanspruchten Erfindung liegende Ausführungsvariante besteht darin, dass die nockenförmigen Vorsprünge, welche zugleich Perforationselemente sein können, zudem derart gestaltet sind, dass sie zugleich Räumelemente sind, die in die in den Druckwalzen vorgesehenen Ausnehmungen eingreifen und dort eingeklemmtes, abgesplittertes Material herausziehen oder -drücken.

### Bezugsziffernverzeichnis:

- 1: Vorrichtung
- 2: Gehäuse
- 3: Einfüllöffnung
- 3a: Zufuhrraum
- 4: Austrittsöffnung
- 5: erste Druckwalzen
501 Drehachse
502 erster Endabschnitt
503 zweiter Endabschnitt
504 Drehrichtung
505 Mantelfläche
506 Teil-Bereiche
507 erster Abschnitt (mit Druckfläche)
508 zweiter Abschnitt
509 dritter Abschnitt (mit Druckfläche)
510 umlaufende Ausnehmung (in Pos. 505)
511 nockenförmiger Vorsprung
512 Stirnfläche
513 Kopffläche
514 Rückenfläche
515 Seitenflächen
516 Schrägflächen (Fasen)
- 50: erste Druckwalzen zweiter Art
517 Längsnuten
518 Druckkanten (zugleich Mitnehmer)
- 54: erste Druckwalze dritter Art
545 Mantelfläche
546 Teil-Bereiche
547 erster Abschnitt (mit Druckfläche)
548 zweiter Abschnitt
549 dritter Abschnitt (mit Druckfläche)
550 umlaufende Ausnehmung (in Pos. 545)
551 nockenförmiger Vorsprung
552 Stirnfläche
553 Kopffläche
554 Rückenfläche
555 Seitenflächen
556 Schrägflächen (Fasen)
- 6: Gegenlager (zweite Druckwalze)
601 Drehachse
602 erster Endabschnitt
603 zweiter Endabschnitt
604 Drehrichtung
605 Mantelfläche
606 Teil-Bereiche
607 erster Abschnitt
608 zweiter Abschnitt
609 dritter Abschnitt
610 umlaufende Ausnehmung (in Pos. 605)
611 nockenförmiger Vorsprung
612 Stirnfläche
613 Kopffläche
614 Rückenfläche
615 Seitenflächen
616 Schrägflächen (Fasen)
- 60: zweite Druckwalze zweiter Art
617 Längsnuten
618 Druckkanten (zugleich Mitnehmer)
- 64: zweite Druckwalze dritter Art
641 Drehachse
642 erster Endabschnitt
643 zweiter Endabschnitt
644 Drehrichtung
645 Mantelfläche
646 Teil-Bereiche
647 erster Abschnitt
648 zweiter Abschnitt
649 dritter Abschnitt
650 umlaufende Ausnehmung (in Pos. 645)
651 nockenförmiger Vorsprung
652 Stirnfläche
653 Kopffläche
654 Rückenfläche
655 Seitenflächen
656 Schrägflächen (Fasen)
- 7: Mitnahmeeinheit
70 Drehachse von Pos. 7
71, 72, 73 Flügel von Pos. 7
- 8: Leitblech
- 9: Spalt (Einzugsspalt und Arbeitsspalt)
- 10: Rutsche
- 11: Pfeil
- 12: Druckräume
- 13: Abstand zwischen Pos. 501 und 601 (zwischen den Drehachsen der Walzen)
- 14: Abstreifer
- 15,16: Behälter (zugeführter Behälter, z.B. Kunststoffflasche, Getränkedose)
- 17: zusammengedrückter Behälter
- 18, 19: Lagerplatten
- 20: Seitenflanken (von Pos. 510)
- 21: Seitenflanken (von Pos. 610)
- 22: Seitenflanken (von Pos. 550)
- 23: Seitenflanken (von Pos. 650)
- P: Position des Behälters 15
- B: Breite der fasenförmigen Fläche (von Pos. 516 bzw. 616; 556 bzw. 656)
- H: Höhe (von Pos. 511 bzw. 611; 551 bzw. 651)

## Patentansprüche

1. Rotierbare Druckwalze (5) für eine Vorrichtung zum Zusammendrücken leerer Hohlkörper
a) die zylinderförmige Mantelfläche (505) der Druckwalze (5) in ihrem Arbeitsbereich, in axialer Richtung nacheinander folgend, mehrere profilierte Teil-Bereiche (506) gleicher Art und gleicher Breite besitzt,
b) wobei diese profilierten Teil-Bereiche (506) jeweils durch eine umlaufende Ausnehmung (510) voneinander getrennt sind, und,
c) dass jeder dieser profilierten Teil-Bereiche (506) - axial gesehen - einen ersten, einen zweiten und einen dritten nacheinander in axialer Richtung folgenden Abschnitt (507, 508, 509) aufweist,
d) wobei im mittleren (508) dieser Abschnitte wenigstens ein von der Mantelfläche (505) radial abragender, nockenförmiger Vorsprung (511) angeordnet ist,
e) wobei die Abschnitte (507, 509) neben dem Abschnitt (508) mit dem nockenförmigen Vorsprung (511) jeweils als Druckflächen ausgebildet sind,
**dadurch gekennzeichnet, dass**
f) jeder nockenförmige Vorsprung (511) zahnförmig ausgebildet ist und im kopfseitigen Kantenbereich zu seiner jeweiligen Seitenfläche (515) eine geneigte fasenförmige Schrägfläche (516) besitzt, die in ihrer Breite wesentlich grösser ist, als eine normale Kantenfase und/oder
der jeweils zu der betreffenden umlaufenden Ausnehmung (510) hin zeigende Kantenbereich der Abschnitte (507, 509) neben dem Abschnitt (508) mit dem nockenförmigen Vorsprung (511) eine geneigte fasenförmige Schrägfläche (656) besitzt.

2. Rotierbare Druckwalze nach Anspruch 1,
**dadurch gekennzeichnet, dass**
mehrere nockenförmige Vorsprünge gleichmäßig am Umfang jedes betreffenden Abschnittes verteilt angeordnet sind,.

3. Rotierbare Druckwalze nach Anspruch 1 oder 2,
**dadurch gekennzeichnet, dass**
die Druckflächen gleich breit, bevorzugt gleich der Breite des Abschnittes mit dem nockenförmigen Vorsprung, wenigstens halb so breit, sind.

4. Rotierbare Druckwalze nach Anspruch 1, 2 oder 3,
***dadurch gekennzeichnet, dass***
der nockenförmige Vorsprung zugleich ein Perforationselement ist.

5. Rotierbare Druckwalze nach Anspruch 1, 2, 3 oder 4,
**dadurch gekennzeichnet, dass**
jeder nockenförmige Vorsprung derart ausgebildet ist, dass er zugleich ein Brechelement für Glasflaschen ist.

6. Rotierbare Druckwalze nach Anspruch 1, 2, 3, 4 oder 5,
**dadurch gekennzeichnet, dass**
die Druckwalzen aus Vollmaterial und Vergütungsstahl bestehen und ihre Mantelfläche nebst abragenden nockenförmigen Vorsprüngen zumindest oberflächengehärtet sind.

7. Vorrichtung zum Zusammendrücken leerer Hohlkörper mit wenigstens einer rotierbaren Druckwalze (5), welche unter Bildung eines Spaltes mit Abstand zu einem Gegenlager angeordnet ist,
**dadurch gekennzeichnet, dass**
die wenigstens eine rotierbare Druckwalze (5) nach einem der vorhergehenden Ansprüche ausgebildet ist.

8. Vorrichtung nach Anspruch 7,
**dadurch gekennzeichnet, dass**
Flächenabschnitte jedes nockenförmigen Vorsprunges (511) mit dem jeweiligen Kantenbereich der gegenüber liegend angeordneten Ausnehmungen des Gegenlagers zusammenwirken derart, dass an den zusammengedrückten Wandbereichen der hindurchgeführten Hohlkörper Quetschbereiche und/oder Reissbereiche oder. Schnittbereiche gebildet sind.

## Claims

1. A rotatable compression roller (5) for a device for compressing empty hollow elements,
a) wherein a cylindrical enveloping surface (505) of the compression roller (5) includes plural profile portions (506) of identical type and identical width in an operating portion of the compression roller (5) in axial sequential alignment,
b) wherein the profile portions (506) are respectively separated from each other by a circumferential recess (510), and
c) wherein each of the profile portions (506) includes a first, a second and a third section (507, 508, 509) sequentially aligned in the axial direction,
d) wherein at least one cam-shaped protrusion (511) that radially protrudes from the enveloping surface (505) is arranged in a center section (508),
e) wherein the sections (507, 509) adjacent to the section (508) with the cam-shaped protrusion (511) are respectively configured as compression surfaces, **characterized in that**
f) each cam-shaped protrusion(511) is configured tooth-shaped and includes a sloped beveled slanted surface (516) in a topside edge portion adjacent to its respective side surface (515), wherein the sloped beveled slanted surface has a much greater width than a normal edge bevel,
and/or
an edge portion of the sections (507, 509) that is respectively oriented towards the respective circumferential recess (510) has a sloped beveled slanted surface (656) adjacent to the section (508) with the cam-shaped protrusion (511).

2. The rotatable compression roller according to claim 1,
**characterized in that**
plural cam-shaped protrusions are uniformly distributed along a circumference of each respective section.

3. The rotatable compression roller according to claim 1 or 2,
**characterized in that**
the compression surfaces have identical widths, advantageously identical to a width of the section with the cam-shaped protrusion, at least half the width.

4. The rotatable compression roller according to claim 1, 2 or 3,
**characterized in that**
the cam-shaped protrusion simultaneously functions as a perforation element.

5. The rotatable compression roller according to claims 1, 2, 3 or 4, **characterized in that**
each cam-shaped protrusion is configured so that it simultaneously forms a cracking element for glass bottles.

6. The rotatable compression roller according to claims 1, 2, 3, 4 or 5, **characterized in that**
the compression rollers are made from solid heat-treatable steel and their enveloping surfaces including the cam-shaped protrusions are at least surface hardened.

7. A device for compressing empty hollow elements including at least one rotatable compression roller (5) which is arranged at a distance from a counter surface so that a gap is formed,
**characterized in that**
the at-least one rotatable compression roller (5) is configured according to one of the preceding claims.

8. The device according to claim 7,
**characterized in that**
surface sections of each cam shaped protrusion (511) cooperate with the respective edge portion of opposite recesses of the counter surface so that crushing portions and/or tearing portions or cutting portions are formed at compressed wall portions of the hollow bodies that are passed through.

## Revendications

1. Rouleau de compression rotatif (5) pour un dispositif pour comprimer des corps creux vides
a) la surface enveloppante cylindrique (505) du rouleau de compression (5) comprenant dans sa zone de travail de manière successive dans la direction axiale plusieurs portions profilées (506) du même type et de la même largeur,
b) ces portions profilées (506) étant séparées l'une de l'autre par un évidement circonférentiel (510), et
c) chacune de ces portions profilées (506) comprenant - vu en direction axiale - une première, une deuxième et une troisième section (507, 508, 509), successives dans la direction axiale,
d) au moins une projection en forme de came en saillie radiale de la surface enveloppante cylindrique (505) étant arrangée dans la section moyenne (508) de ces sections,
e) les sections (507, 509) à côté de la section (508) avec la projection en forme de came (511) étant chacune adaptées sous forme de surface de compression,
**caractérisé en ce que**
f) chaque projection en forme de came (511) est adaptée en forme de dent et comprend dans la région de bord du côté de la tête vers sa surface latérale respective (515) une surface inclinée en forme de chanfrein (516) dont la largeur est nettement plus grande qu'un chanfrein de bord normal
et/ou
la région de bord respective des sections (507, 509) orientée vers l'évidement circonférentiel (510) comprend en dehors de la section (508) avec la projection en forme de came (511) aussi une surface inclinée en forme de chanfrein (656).

2. Rouleau de compression rotatif selon la revendication 1,
**caractérisé en ce que**
plusieurs projections en forme de came sont réparties de manière uniforme à la périphérie de chaque section respective.

3. Rouleau de compression rotatif selon les revendications 1 ou 2,
**caractérisé en ce que**
les surfaces de compression sont de la même largeur, de préférence de la même largeur que la section avec la projection en forme de came, au moins d'une largeur réduite de moitié.

4. Rouleau de compression rotatif selon les revendications 1, 2 ou 3,
**caractérisé en ce que**
la projection en forme de came est en même temps un élément de perforation.

5. Rouleau de compression rotatif selon les revendications 1, 2, 3 ou 4,
**caractérisé en ce que**
chaque projection en forme de came est adaptée de telle sorte qu'elle est en même temps un élément de concassage pour des bouteilles en verre.

6. Rouleau de compression rotatif selon les revendications 1, 2, 3, 4 ou 5,
**caractérisé en ce que**
les rouleaux de compression sont faits d'un matériau plein et d'acier de traitement et **en ce que** leur surface enveloppante et les projections en forme de came sont au moins durcies en surface.

7. Dispositif pour comprimer des corps creux vides avec au moins un rouleau de compression rotatif (5) qui est arrangé en formant une fente et avec une distance à un contre-support,
**caractérisé en ce que**
ledit au moins un rouleau de compression rotatif (5) est adapté selon une des revendications précédentes.

8. Dispositif selon la revendication 7,
**caractérisé en ce que**
des sections de surface de chaque projection en forme de came (511) coopère avec la région de bord correspondant de l'encoche du contre-support arrangée de manière opposée, de sorte que des zones de pressage et/ou des zones de déchirage ou des zones de coupe sont formées dans les régions de paroi comprimées des corps creux qu'on fait passer.
